# EUROPEAN PATENT APPLICATION

(11) **EP 2 689 899 A1**
(43) Date of publication of application: **29.01.2014**
(21) Application number: 13173480.8
(22) Date of filing: 25.06.2013
(51) Int. Cl.: B25J 9/00, A21C 9/08, B25J 15/00

(54) **Robot hand, robot system provided with the robot hand, method of production using the robot system and product produced by the method**

(30) Priority: 27.07.2012 JP 2012166572
(71) Applicant: Kabushiki Kaisha Yaskawa Denki, Kitakyushu-Shi Fukuoka 806 (JP)
(72) Inventor: Takata, Hiroshi, Kitakyushu-shi, Fukuoka 806-0004 (JP)
(74) Representative: Viering, Jentschura & Partner

(57) **Abstract**

A robot hand (11) comprising two receiving portions (111, 112) for receiving, processing, and placing a workpiece (6) is provided. The robot hand (11) is configured to receive the workpiece (6) conveyed by a conveyor (4) at a lower side of the conveyor (4), process the workpiece (6), and place the processed workpiece (6) in a specified position (5).

## Description

### Technical Field

Disclosed embodiments herein relate to a robot hand capable of transferring a soft object, a robot system provided with the robot hand, a method of production using the robot system and a product produced by the method.

### Background Art

In the past, there are known a robot system and a robot hand for transferring a soft object (see, e.g., WO2011/152520A1)

WO2011/152520A1 discloses a food product transfer system (robot system) that includes a transfer robot (robot) provided with a robot hand for lifting, holding, and transferring a food product (soft object) conveyed by a conveyor belt and a control means (control unit) for controlling the operation of the robot hand of the transfer robot.

In the food product transfer system (robot system) disclosed in WO2011/152520A1, a food product (soft object) is lifted from the conveyor belt by the robot hand. It is therefore necessary to lift the food product while controlling the force of the robot hand so as not to deform the soft and easy-to-deform food product. For this reason, a problem is posed in that the control of the robot hand becomes complex.

### Summary of the Disclosure

In view of the problem noted above, the disclosed embodiments provide a robot system and a robot hand which are capable of restraining the control from becoming complex during the transfer of a soft product, a method of production using the robot system, and a product produced by the method.

In accordance with a first aspect, there is provided a robot hand configured to receive a workpiece conveyed by a conveyor at a lower side of the conveyor, process the workpiece and place the processed workpiece in a specified position.

In accordance with a second aspect, there is provided a robot system including the robot hand configured to receive a workpiece conveyed by a conveyor at a lower side of the conveyor, process the workpiece, and place the processed workpiece in a specified position.

In accordance with a third aspect, there is provided a method of producing a food product using the robot hand which is configured to receive a workpiece conveyed by a conveyor at a lower side of the conveyor, process the workpiece, and place the processed workpiece in a specified position, including: causing the robot hand to receive a workpiece conveyed by a conveyor at a lower side of the conveyor; causing the robot hand to process the workpiece; and causing the robot hand to place the workpiece in a specified position. Further, in accordance with a fourth aspect, there is provided a product produced by the method as such.

With the above configuration, it is possible to restrain the control for the transfer of the soft object from becoming complex.

### Brief Description of the Drawings

Fig. 1 is a plan view showing the overall configuration of a robot system according to an embodiment.
Fig. 2 is a perspective view showing a hand unit of the robot system according to the present embodiment, which is positioned in a soft product receiving position.
Fig. 3 is a side view showing the hand unit of the robot system according to the present embodiment, which is positioned in the soft product receiving position.
Fig. 4 is a perspective view showing the hand unit of the robot system according to the present embodiment, which has received a soft product.
Fig. 5 is a perspective view showing the hand unit of the robot system according to the present embodiment, which is folding the soft product.
Fig. 6 is a perspective view showing the hand unit of the robot system according to the present embodiment, which holds the soft product in a folded state.
Fig. 7 is a section view showing the hand unit of the robot system according to the present embodiment before the soft product is placed.
Fig. 8 is a section view showing the hand unit of the robot system according to the present embodiment as the soft product is being placed.
Fig. 9 is a perspective view showing the hand unit of the robot system according to the present embodiment, from which the soft product has been placed.
Fig. 10 is a plan view showing sensors of the robot system according to the present embodiment and their vicinities.
Fig. 11 is a view for explaining the tilt of the soft product in the robot system according to the present embodiment.
Fig. 12 is a view showing soft product detection signals generated by the sensors of the robot system according to the present embodiment.
Fig. 13 is a flowchart for explaining a soft product tilt detecting process performed by a robot controller of the robot system according to the present embodiment.

### Detailed Description of the Preferred Embodiments

Embodiments will now be described in detail with reference to the accompanying drawings which form a part hereof.

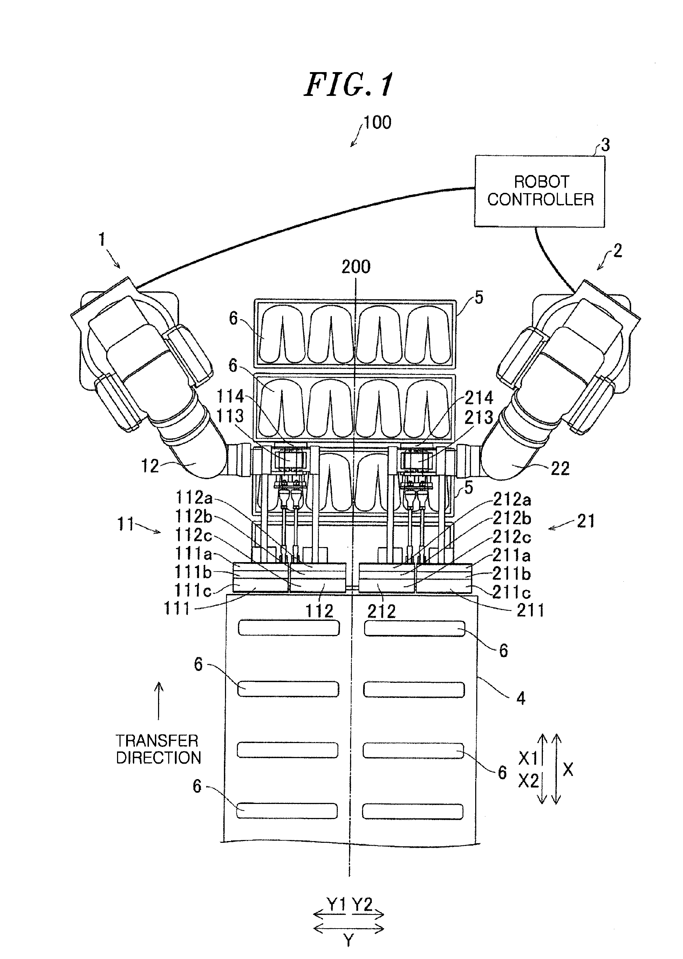

The configuration of a robot system 100 according to an embodiment will be described with reference to Figs. 1 through 10.

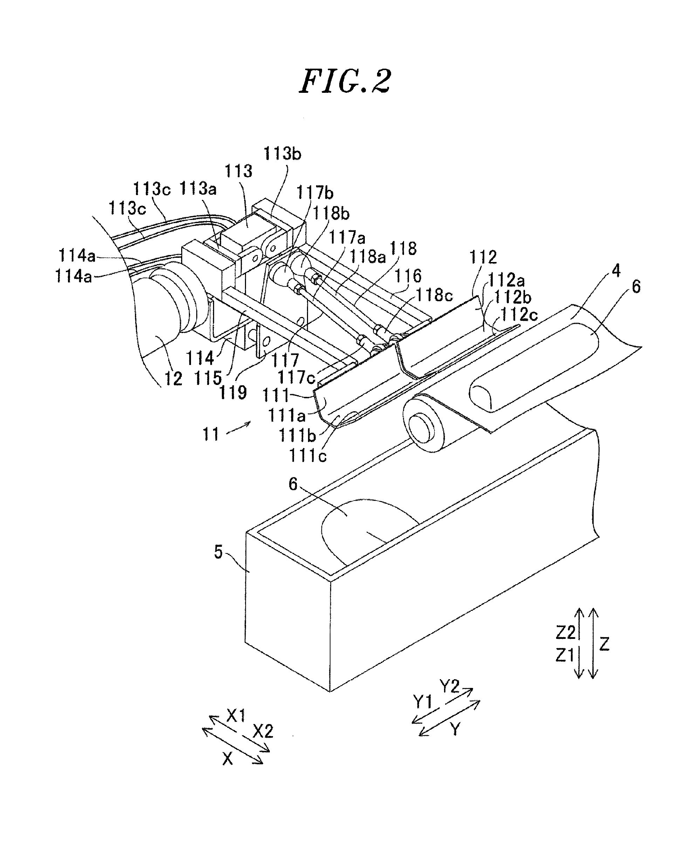

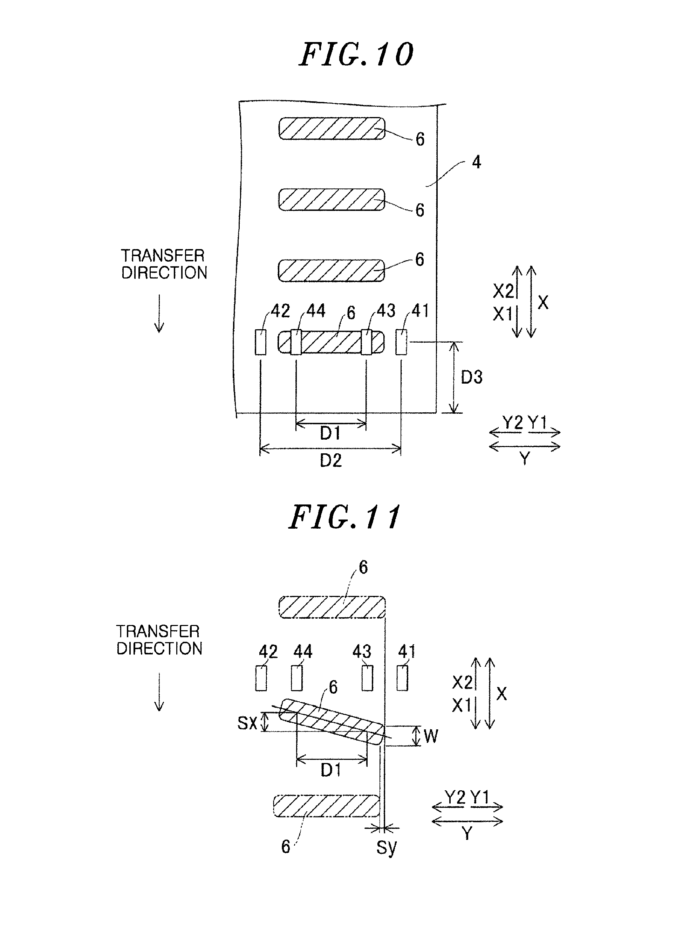

As shown in Fig. 1, the robot system 100 according to the present embodiment includes a robot 1, a robot 2, and a robot controller 3. The robot 1 has an arm 12 to which a hand unit 11 is attached, and the robot 2 has an arm 22 to which a hand unit 21 is attached. As shown in Fig. 10, the robot system 100 includes a first sensor 41, a second sensor 42, a third sensor 43, and a fourth sensor 44. The robot system 100 is a system for receiving a workpiece 6 conveyed by a conveyor 4 at the lower side of the conveyor 4 (at the Z1 direction side in Fig. 2), processing the workpiece 6 and placing the workpiece 6 on a product tray 5 as shown in Fig. 1.

In the following description of the embodiment, a soft product such as dough or the like used in producing foodstuff like bread will be taken as one example of the workpiece 6. However, the disclosed embodiments herein are not limited thereto. In the following description, the workpiece 6, transferred and processed, is placed on the product tray 5. The term "placed" or "placing" used herein is intended to include placing the workpiece 6 in a specified position.

As shown in Fig. 1, the robot 1 (2) is a vertical articulated robot. A servo motor (not shown) for driving a joint is arranged within the arm 12 (22) of the robot 1 (2). The operation of the servo motor is controlled by the robot controller 3. The robot 1 is arranged at the downstream side in the transfer direction of the conveyor 4 (at the X1 direction side) and at the Y1 side. The robot 2 is arranged at the downstream side in the transfer direction of the conveyor 4 (at the X1 direction side) and at the Y2 side. The hand unit 11 (21) is attached to the tip end of the arm 12 (22).

The robot 1 and the robot 2 are controlled by the robot controller 3 such that they are driven with no mutual interference. More specifically, the robot 1 and the robot 2 are configured to operate without crossing a Y-direction centerline 200. Namely, the robot 1 is configured to operate at the Y1 direction side of the centerline 200. The robot 2 is configured to operate at the Y2 direction side of the centerline 200. In other words, the soft products 6 conveyed by the conveyor 4 at the Y1 direction side and the Y2 direction side of the centerline 200 are respectively processed and transferred by the robot 1 and the robot 2. Then, the soft products 6 are placed on the product tray 5 at the Y1 direction side and the Y2 direction side, e.g., in two rows.

In the present embodiment, the hand unit 11 (21) is used to receive the soft product 6 conveyed by the conveyor 4 at the lower side of the conveyor 4 (at the Z1 direction side) and to process and transfer the soft product 6. The hand unit 11 (21) is configured to place a plurality of soft products 6 inside the product tray 5 in an adjoining relationship with one another as shown in Fig. 1. When receiving the soft product 6, the hand unit 11 is arranged at the downstream side in the transfer direction of the conveyor 4 (at the X1 direction side) and at the Y1 side.

The hand unit 21 is arranged at the downstream side in the transfer direction of the conveyor 4 (at the X1 direction side) and at the Y2 side so as to adjoin the hand unit 11. Furthermore, the hand unit 11 is mounted to the arm 12 of the robot 1 at the opposite side from the adjoining hand unit 21 (at the Y1 direction side). The hand unit 21 is mounted to the arm 22 of the robot 2 at the opposite side from the adjoining hand unit 11 (at the Y2 direction side).

The hand unit 11 (21) includes a first reception portion 111 (211), a second reception portion 112 (212), an air chuck 113 (213), and an air cylinder 114 (214). The first reception portion 111 (211) includes a first wall portion 111a (211a), a bottom portion 111b (211b), and a second wall portion 111c (211c). The second reception portion 112 (212) includes a first wall portion 112a (212a), a bottom portion 112b (212b), and a second wall portion 112c (212c). The air chuck 113 (213) is one example of a "first air drive unit". The air cylinder 114 (214) is one example of a "second air drive unit".

The hand unit 11 and the hand unit 21 are identical in configuration with each other. Therefore, the hand unit 11 will be primarily described while omitting description of the hand unit 21.

The first reception portion 111 and the second reception portion 112 of the hand unit 11 are configured to receive the soft product 6 from the conveyor 4, process the soft product 6, and hold the soft product 6. Moreover, the first reception portion 111 and the second reception portion 112 are configured to transfer the soft product 6 and place the soft product 6 on the product tray 5.

More specifically, when receiving the soft product 6 at the lower side of the conveyor 4 (at the Z1 direction side) as shown in Fig. 2, the first reception portion 111 and the second reception portion 112 are arranged along the longitudinal direction of the soft product 6 (along the Y direction). In other words, when receiving the soft product 6 at the lower side of the conveyor 4 (at the Z1 direction side), the first reception portion 111 and the second reception portion 112 are arranged along the direction (the Y direction) orthogonal to the transfer direction of the conveyor 4 (the X direction).

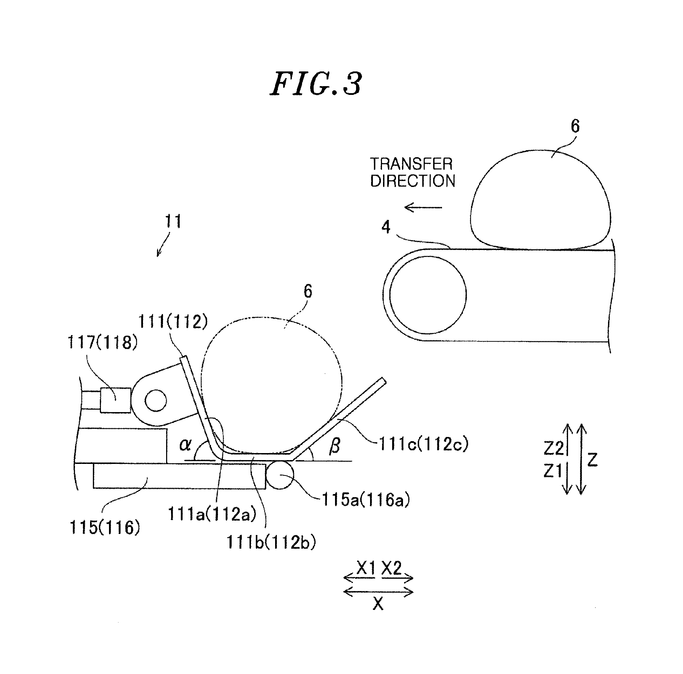

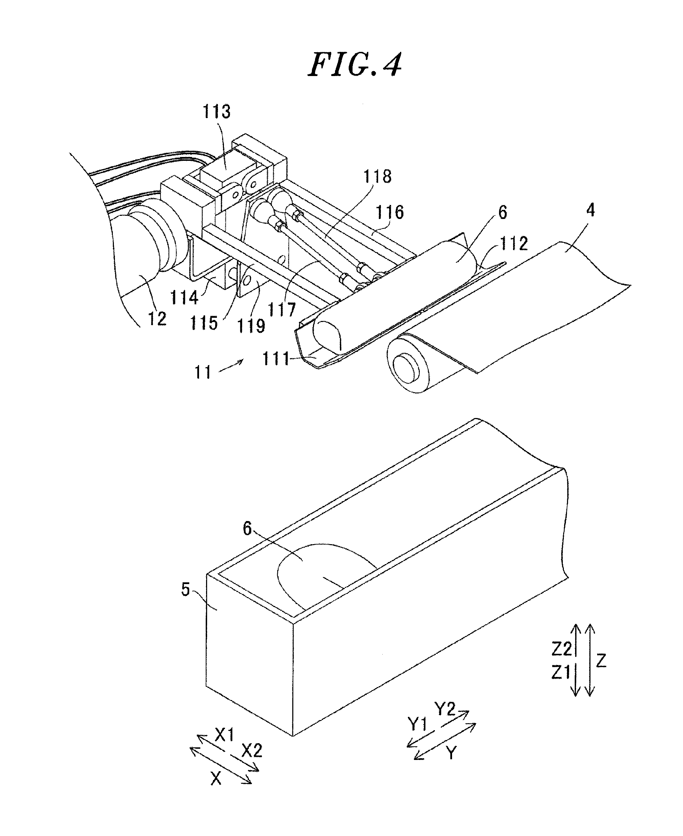

As shown in Figs. 3 and 4, the first reception portion 111 and the second reception portion 112 are formed to have a substantially U-like cross section. More specifically, when receiving the soft product 6 at the lower side of the conveyor 4 (at the Z1 direction side), the first reception portion 111 (or the second reception portion 112) has a substantially U-like cross section which is defined by the first wall portion 111a (112a) arranged at the opposite side of the second wall portion 111c (112c) from the conveyor 4 (at the X1 direction side), the bottom portion 111b (112b) arranged at the lower side (at the Z1 direction side), and the second wall portion 111c (112c) arranged at the side of the conveyor 4 (at the X2 direction side).

As shown in Fig. 3, the first wall portion 111a (112a) is inclined outward at an angle α (e.g., 70 degrees) with respect to the bottom portion 111b (112b). The second wall portion 111c (112c) is inclined outward at an angle β (e.g., 40 degrees) with respect to the bottom portion 111b (112b). In other words, the second wall portion 111c (112c) is inclined outward at a smaller angle than the angle of the first wall portion 111a (112a). Namely, each of the first reception portion 111 and the second reception portion 112 includes a passage portion through which the soft product 6 passes during reception and removal thereof, i.e., an inner upper space of the U-like cross section which is defined by the first wall portion 111a (112a) and the second wall portion 111c (112c), and a mounting portion on which the soft product 6 is placed, i.e., a bottom portion 111b (112b).

As shown in Fig. 2, the first reception portion 111 and the second reception portion 112 are formed to extend along the direction (the Y direction) orthogonal to the transfer direction of the conveyor 4 (the X direction) when receiving the soft product 6 at the lower side of the conveyor 4 (at the Z1 direction side). The first wall portion 111a (112a) and the second wall portion 111c (112c) are arranged to have angles α and β with respect to the horizontal plane when receiving the soft product 6 at the lower side of the conveyor 4.

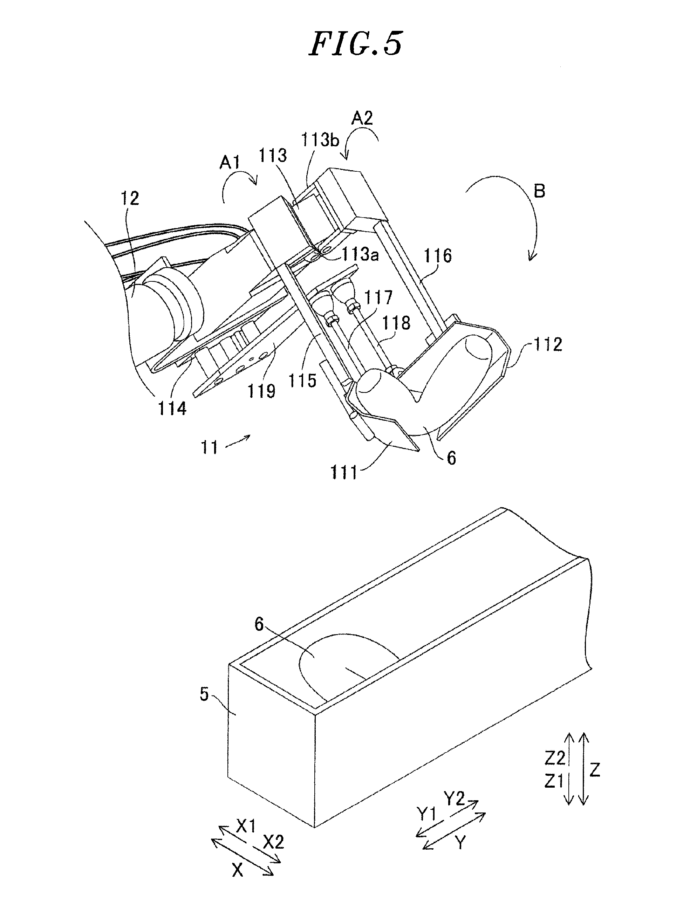

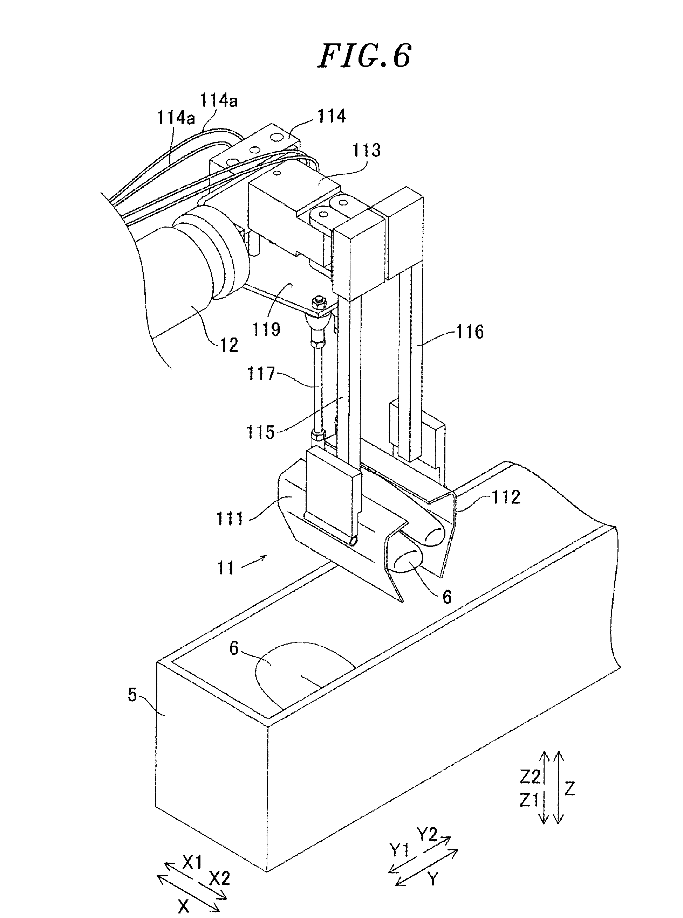

The robot controller 3 controls the first reception portion 111 and the second reception portion 112 to fold the soft product 6 and to hold the folded soft product 6, by moving the first reception portion 111 and the second reception portion 112 so that the product receiving sides (the inner sides) thereof can face each other as shown in Figs. 5 and 6. In other words, the first reception portion 111 and the second reception portion 112 are configured to fold, substantially in half, the soft product 6 extending along the Y direction, which is received from the conveyor 4, and to hold the folded soft product 6 between themselves.

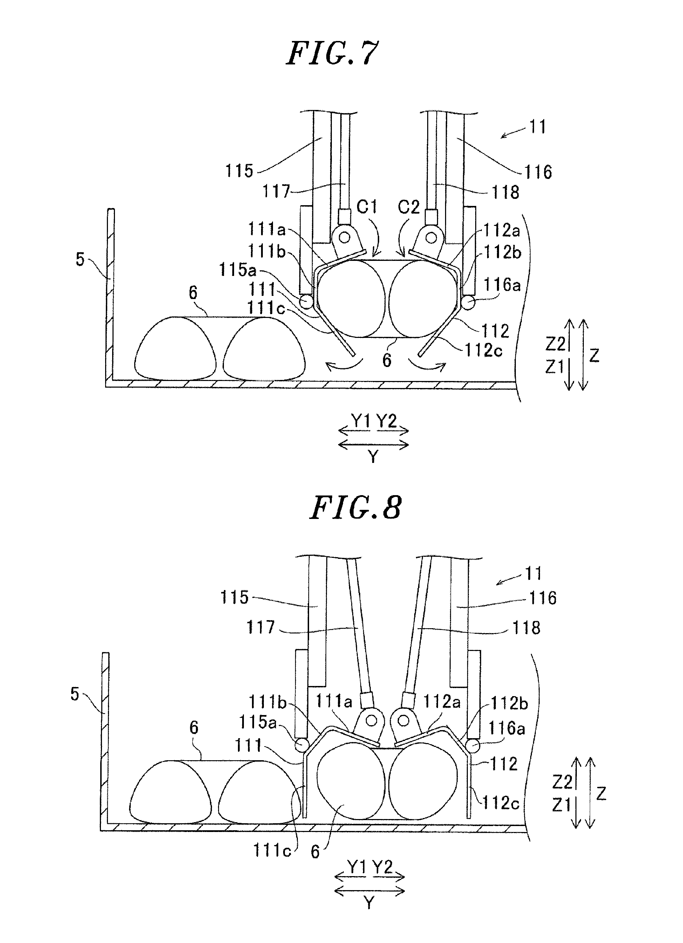

As shown in Figs. 7 and 8, the robot controller 3 is configured to, when placing the soft product 6, rotate the first reception portion 111 (the second reception portion 112) about a pivot shaft 115a (116a) extending along the longitudinal direction of the soft product 6 held in a folded state (along the X direction). As a consequence, the first wall portion 111a (112a) is moved toward the soft product 6 (toward the Z1 direction side). In other words, the first reception portion 111 (the second reception portion 112) is configured such that, when placing the soft product 6 on the product tray 5, the soft product 6 is pushed downward by the first wall portion 111a (112a) existing above the soft product 6.

The second wall portion 111c (112c) is moved toward the outer side of the first reception portion 111 (the second reception portion 112). In other words, the first reception portion 111 (the second reception portion 112) is configured such that, when placing the soft product 6 on the product tray 5, another soft product 6 existing around the placing position is moved away from the first reception portion 111 (the second reception portion 112) (in the Y1 direction side or the Y2 direction) by the second wall portion 111c (112c) positioned at the lower side of the soft product 6 (at the Z1 direction side) so that the soft product 6 to be placed should not overlap with another soft product 6.

As shown in Fig. 2, the hand unit 11 further includes an arm 115 for supporting the first reception portion 111, an arm 116 for supporting the second reception portion 112, a connecting portion 117 for transmitting the movement of the air cylinder 114 to the first reception portion 111, a connecting portion 118 for transmitting the movement of the air cylinder 114 to the second reception portion 112, and a plate 119 for transmitting the movement of the air cylinder 114 to the connecting portions 117 and 118.

The air chuck 113 is configured to move (or rotate) the first reception portion 111 and the second reception portion 112 so that the product receiving sides of the first reception portion 111 and the second reception portion 112 can face each other. More specifically, as shown in Fig. 2, the air chuck 113 includes finger portions 113a and 113b capable of rotating in an opening direction and in a closing direction. A pair of tubes 113c for supplying a drive air is attached to the air chuck 113. The arm 115 for supporting the first reception portion 111 is attached to the finger portion 113a. The arm 116 for supporting the second reception portion 112 is attached to the finger portion 113b.

As shown in Fig. 5, the air chuck 113 is configured to rotate the finger portion 113a in the A1 direction and the finger portion 113b in the A2 direction by drive air, thereby moving the first reception portion 111 and the second reception portion 112 so that the product receiving sides thereof can face each other. Furthermore, the air chuck 113 is configured to rotate the finger portion 113a in the counter A1 direction and the finger portion 113b in the counter A2 direction by drive air, thereby returning the first reception portion 111 and the second reception portion 112 to an open state.

The air cylinder 114 is configured to rotate the first reception portion 111 and the second reception portion 112 when placing the soft product 6 on the product tray 5. More specifically, as shown in Fig. 6, a pair of tubes 114a for supplying drive air is attached to the air cylinder 114. The connecting portion 117 linked to the first reception portion 111 and the connecting portion 118 linked to the second reception portion 112 are connected to the air cylinder 114 through the plate 119. Thus, the movement of the air cylinder 114 is transmitted to the first reception portion 111 via the plate 119 and the connecting portion 117.

Likewise, the movement of the air cylinder 114 is transmitted to the second reception portion 112 via the plate 119 and the connecting portion 118. The air cylinder 114 is configured to extend so as to push the plate 119 toward the first reception portion 111 and the second reception portion 112, or retract so as to pull the plate 119. In other words, the air cylinder 114 is configured to push the plate 119 downward (in the Z1 direction) when placing the received soft product 6. Thus, as shown in Figs. 7 and 8, the first reception portion 111 (the second reception portion 112) is pushed downward (in the Z1 direction) and is rotated about the pivot shaft 115a (116a).

The arm 115 is configured to support the first reception portion 111. More specifically, the arm 115 rotatably supports, at one end thereof, the first reception portion 111 through the pivot shaft 115a (see Fig. 7) extending along the longitudinal direction of the soft product 6. As shown in Fig. 2, the arm 115 is fixed, at the other end thereof, to the finger portion 113a of the air chuck 113. The arm 116 is configured to support the second reception portion 112. More specifically, the arm 116 rotatably supports, at one end thereof, the second reception portion 112 through the pivot shaft 116a (see Fig. 7) extending along the longitudinal direction of the soft product 6. As shown in Fig. 2, the arm 116 is fixed, at the other end thereof, to the finger portion 113b of the air chuck 113.

The connecting portion 117 (118) is configured to interconnect the plate 119 and the first reception portion 111 (the second reception portion 112). As shown in Fig. 2, the connecting portion 117 (118) includes a connecting rod 117a (118a) and link parts 117b and 117c (118b and 118c). The connecting rod 117a (118a) is connected to the plate 119 by the link part 117b (118b) and is connected to the first reception portion 111 (the second reception portion 112) by the link part 117c (118c).

The link part 117b (118b) is attached to the plate 119 so that the link part 117b (118b) can rotate about the axis of the connecting rod 117a and can make tilting movement with respect to the plate surface of the plate 119. Accordingly, even if the first reception portion 111 is rotated in the A1 direction (see Fig. 5) by the air chuck 113 and even if the second reception portion 112 is rotated in the A2 direction (see Fig. 5) by the air chuck 113, it is possible for the connecting portion 117 (118) to interconnect the plate 119 and the first reception portion 111 (the second reception portion 112).

The link part 117c (118c) is attached to the first wall portion 111a (112a) of the first reception portion 111 (the second reception portion 112) so that the link part 117c (118c) can make tilting movement with respect to the first wall portion 111a (112a) of the first reception portion 111 (the second reception portion 112). Accordingly, the movement of the air cylinder 114 can be transmitted to the first reception portion 111 (the second reception portion 112) by the connecting portion 117 (118) through the plate 119 so that the first reception portion 111 (the second reception portion 112) can make rotation.

The robot controller 3 is configured to control the operation of the robots 1 and 2. More specifically, the robot controller 3 is configured to control the processing and transferring of the soft product 6 performed by the robots 1 and 2.

As shown in Fig. 1, the conveyor 4 is configured to convey the soft products 6 in the X1 direction. Furthermore, the conveyor 4 is configured to convey the soft products 6 in two rows along the Y direction. As shown in Fig. 10, a first sensor 41 and a second sensor 42 for sensing the maximum width of the soft products 6 and a third sensor 43 and a fourth sensor 44 for sensing the tilt of the soft products 6 with respect to the Y direction are arranged above the conveyor 4. The first sensor 41, the second sensor 42, the third sensor 43, and the fourth sensor 44 are arranged above the conveyor 4 in two sets in a corresponding relationship with the two rows of the soft products 6.

The third sensor 43 and the fourth sensor 44 are arranged at an interval D1 in the direction (the Y direction) orthogonal to the transfer direction of the conveyor 4 (the X direction). The first sensor 41 and the second sensor 42 are arranged at an interval D2 larger than the interval D1 in the direction (the Y direction) orthogonal to the transfer direction of the conveyor 4. The first sensor 41, the second sensor 42, the third sensor 43, and the fourth sensor 44 are arranged in the positions spaced apart by a distance D3 in the X direction from the X1 direction end of the conveyor 4.

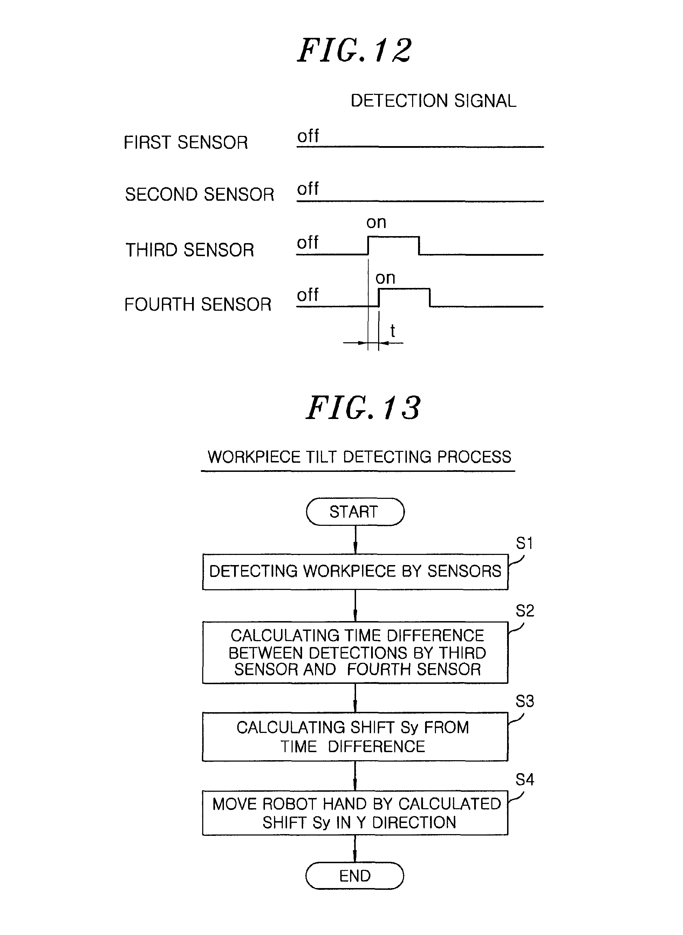

The first sensor 41, the second sensor 42, the third sensor 43, and the fourth sensor 44 are configured to sense the existence or absence of the soft product 6 in the position just below the sensors on the conveyor 4. In other words, as shown in Fig. 12, the first sensor 41, the second sensor 42, the third sensor 43, and the fourth sensor 44 are configured to send an on detection signal if the soft product 6 exists below the sensors and to send an off detection signal if the soft product 6 does not exist below the sensors.

For instance, in the case of the example shown in Fig. 11, the soft product 6 is tilted with respect to the Y direction. Therefore, the detection signal of the third sensor 43 is first turned to an on-state (see Fig. 12). The detection signal of the fourth sensor 44 is turned to an on-state t seconds after the soft product 6 advances by a distance Sx. In other words, the robot controller 3 calculates the tilt of the soft product 6 with respect to the Y direction based on the difference in the time at which the soft product 6 is detected by the third sensor 43 and the fourth sensor 44.

As shown in Fig. 2, the product tray 5 is formed into, e.g., a substantially rectangular parallelepiped box shape extending in the Y direction. The product tray 5 is transferred in the X1 direction at the lower side of the conveyor 4 (at the Z1 direction side). In the example shown in Fig. 1, a plurality of product trays 5 is arranged along the transfer direction (the X1 direction) in an adjoining relationship with one another. Four folded soft products 6 are placed into the product tray 5 along the Y direction.

Next, the process of detecting the tilt of the soft product 6 and the subsequent process of transferring and processing the soft product 6, which are performed by the robot controller 3, will be described with reference to Figs. 2 to 13.

If the soft product 6 is transferred by the conveyor 4, the robot controller 3 senses the soft product 6 using the third sensor 43 and the fourth sensor 44 in step S1 shown in Fig. 13. More specifically, the robot controller 3 senses the soft product 6 by receiving the detection signals sent from the third sensor 43 and the fourth sensor 44. In step S2, the robot controller 3 calculates the time difference between the timings at which the detection signals sent from the third sensor 43 and the fourth sensor 44 come into an on-state. For instance, in the example shown in Fig. 11, the soft product 6 is tilted with respect to the Y direction. Therefore, as shown in Fig. 12, the detection signal of the fourth sensor 44 is turned to an on-state t seconds after the detection signal of the third sensor 43 comes into an on-state.

In step S3, the robot controller 3 calculates the Y-direction shift Sy based on the time difference calculated as above. More specifically, the robot controller 3 calculates the Y-direction shift Sy of the transfer direction (X1 direction) tip end of the soft product 6 based on the X-direction shift Sx of the soft product 6.

Description will now be made on a method of calculating the shift Sy performed by the robot controller 3. The robot controller 3 calculates the transfer direction (X1 direction) shift Sx of the soft product 6 based on the time difference calculated as above. More specifically, the robot controller 3 calculates the X-direction shift Sx of the soft product 6 pursuant to an equation: shift Sx = t × conveyor velocity v. Next, the robot controller 3 calculates the shift Sy in the direction (the Y direction) orthogonal to the transfer direction of the soft product 6, pursuant to an equation: shift Sy = shift Sx × soft product width W/inter-sensor distance D1.

In step S4, the robot controller 3 performs a control operation for shifting the hand unit 11 (21) by the shift Sy in the Y direction. In other words, the robot controller 3 calculates the Y-direction shift Sy of the soft product 6 while the conveyor 4 conveys the soft product 6 by a distance D3 from the positions of the third sensor 43 and the fourth sensor 44. Then, the robot controller 3 displaces the hand unit 11 (21) by adjusting the Y-direction position of the hand unit 11 (21).

Thereafter, the operation of transferring and processing the soft product 6 is carried out. More specifically, when the soft product 6 is received from the conveyor 4, as shown in Figs. 2 and 3, the first reception portion 111 (211) and the second reception portion 112 (212) of the hand unit 11 (21) are moved toward the lower side of the conveyor 4 (toward the Z1 direction side) in a state where they are arranged side by side along the Y direction. At this time, the robot controller 3 displaces the Y-direction position of the hand unit 11 (21) for the reception of the soft product 6, based on the tilt of the soft product 6 with respect to the orthogonal direction (the Y direction) orthogonal to the transfer direction of the conveyor 4 (the X1 direction) within the transfer plane.

When processing the soft product 6, as shown in Fig. 5, the first reception portion 111 and the second reception portion 112 are moved (or rotated) so that the product receiving sides (the inner sides) of the first reception portion 111 and the second reception portion 112 can face each other. More specifically, the air chuck 113 is driven in the closing direction, whereby the finger portion 113a rotates in the A1 direction and the finger portion 113b rotates in the A2 direction. At this time, the arm 12 rotates in the B direction and the hand unit 11 rotates in the B direction. Consequently, as shown in Fig. 6, the folded soft product 6 is held by the first reception portion 111 and the second reception portion 112 in a state where the hand unit 11 faces downward.

When placing the soft product 6 held as above, the first reception portion 111 and the second reception portion 112 holding the folded soft product 6 are moved to the placing position of the soft product 6 on the product tray 5. More specifically, the arm 12 is driven to move the first reception portion 111 and the second reception portion 112 to above the placing position of the soft product 6 on the product tray 5. Thereafter, the arm 12 is moved downward. The first reception portion 111 and the second reception portion 112 are moved to the placing position of the soft product 6 on the product tray 5.

Then, as shown in Figs. 7 and 8, the first reception portion 111 (the second reception portion 112) rotates about the pivot shaft 115a (116a). More specifically, the air cylinder 114 is driven to extend, thereby causing the plate 19 to push the connecting portion 117 (118) toward the first reception portion 111 (the second reception portion 112), whereby the first reception portion 111 (the second reception portion 112) rotates about the pivot shaft 115a (116a) in the C1 direction (the C2 direction). Eventually, the soft product 6 is pushed downward by the first reception portion 111 and the second reception portion 112 and is placed in the placing position on the product tray 5.

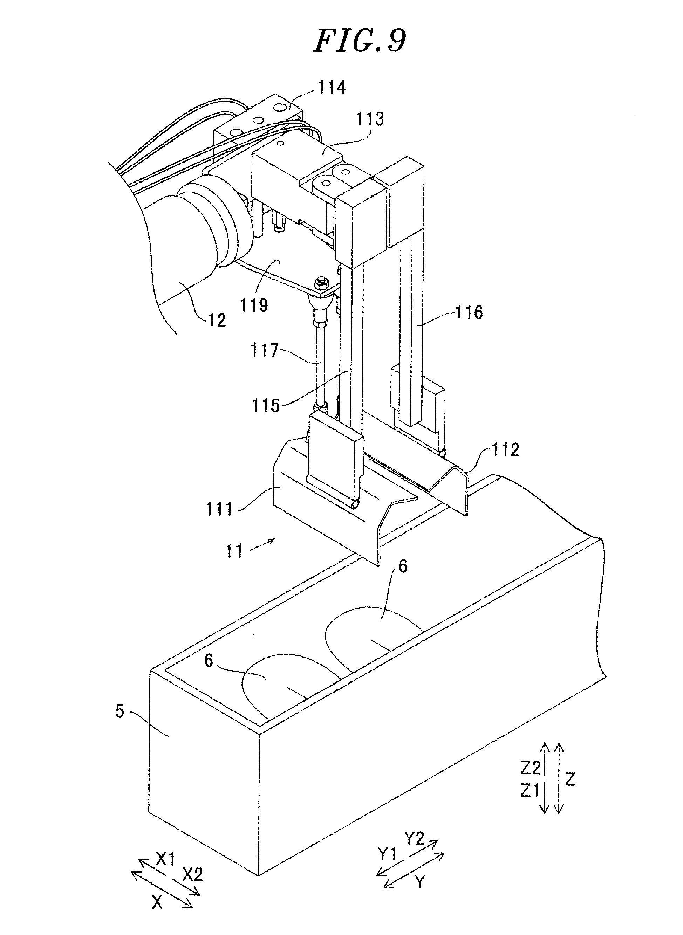

After placing the soft product 6, the first reception portion 111 (the second reception portion 112) is moved to a position where the next soft product 6 is received from the conveyor 4. More specifically, the arm 12 is driven to move the first reception portion 111 and the second reception portion 112 to above the product tray 5 as shown in Fig. 9. The air cylinder 114 is driven to retract, thereby causing the first reception portion 111 (the second reception portion 112) to rotate about the pivot shaft 115a (116a) in the counter C1 (C2) direction. The air chuck 113 is driven in the opening direction. Thus, the first reception portion 111 (211) and the second reception portion 112 (212) of the hand unit 11 (21) are arranged along the Y direction.

In the present embodiment, as set forth above, the robot system 100 is provided with the robot 1 (2) which includes the hand unit 11 (21) for receiving the soft product 6 conveyed by the conveyor 4 at the lower side of the conveyor 4 (at the Z1 direction side), processing the soft product 6, and placing the soft product 6. Accordingly, the hand unit 11 (21) can receive the soft product 6 at the lower side of the conveyor 4 (at the Z1 direction side) by merely moving the hand unit 11 (21) to a specified position onto which the soft product 6 drops. Therefore, unlike a case where the soft product 6 is lifted up, it is possible to restrain the control for the transfer of the soft product 6 from becoming complex. Since the hand unit 11 (21) for transferring the soft product 6 can be used in processing the soft product 6, there is no need to additionally provide a hand unit for processing the soft product 6.

In the present embodiment, as set forth above, the hand unit 11 (21) includes the first reception portion 111 (211) and the second reception portion 112 (212) arranged along the longitudinal direction of the soft product 6 (the Y direction) when receiving the soft product 6 at the lower side of the conveyor 4 (at the Z1 direction side). Accordingly, the first reception portion 111 (211) and the second reception portion 112 (212) arranged along the longitudinal direction of the soft product 6 (the Y direction) can reliably receive the soft product 6 having an elongated shape at the lower side of the conveyor 4 (at the Z1 direction side).

In the present embodiment, as set forth above, the robot controller 3 performs a control operation to move the first reception portion 111 and the second reception portion 112 so that the product receiving sides of the first reception portion 111 and the second reception portion 112 can face each other. This enables the first reception portion 111 and the second reception portion 112 to fold the soft product 6 and hold the soft product 6 in the folded state. Accordingly, it is possible to easily fold the soft product 6 and to reliably hold and transfer the soft product 6 thus folded.

In the present embodiment, as set forth above, the hand unit 11 includes the air chuck 113 for moving the first reception portion 111 and the second reception portion 112 so that the product receiving sides of the first reception portion 111 and the second reception portion 112 can face each other. Accordingly, it is possible to move the first reception portion 111 and the second reception portion 112 and to fold the soft product 6 by merely on/off controlling the air chuck 113 driven by air. Therefore, unlike a case where the first reception portion 111 and the second reception portion 112 are moved by a motor, it is possible to restrain the control for the processing of the soft product 6 from becoming complex.

In the present embodiment, as set forth above, the first reception portion 111 (the second reception portion 112) includes the first wall portion 111a (211a) and the second wall portion 111c (211c). Furthermore, the first reception portion 111 (the second reception portion 112) has a substantially U-like cross section and extends along the longitudinal direction of the soft product 6. Accordingly, it is possible to reliably receive the soft product 6 dropped from the conveyor 4 at the lower side of the conveyor 4 (at the Z1 direction side).

In the present embodiment, as set forth above, the first wall portion 111a (112a) is arranged at the opposite side of the second wall portion 111c (112c) from the conveyor 4 (at the X1 direction side) when the soft product 6 is received by the hand unit 11. The second wall portion 111c (112c) is arranged at the side of the conveyor 4 (at the X2 direction side) when the soft product 6 is received by the hand unit 11. The second wall portion 111c (112c) is inclined outward at a smaller angle than the first wall portion 111a (112a). Accordingly, it is possible to increase the opening size of the first reception portion 111 (the second reception portion 112). This enables the first reception portion 111 (the second reception portion 112) to easily receive the soft product 6 dropped from the conveyor 4.

In the present embodiment, as set forth above, the hand unit 11 is configured such that, when placing the soft product 6, the first wall portion 111a (112a) positioned at the upper side of the soft product 6 (at the Z2 direction side) pushes the soft product 6 downward (in the Z1 direction) from the first reception portion 111 (the second reception portion 112). Therefore, even if the soft product 6 is sticky, it is possible to easily separate the soft product 6 from the first reception portion 111 (the second reception portion 112). This makes it possible to readily place the soft product 6.

In the present embodiment, as set forth above, the hand unit 11 is configured such that, when placing the soft product 6, another soft product 6 existing around the placing position is moved away from the first reception portion 111 (the second reception portion 112) by the second wall portion 111c (112c) positioned at the lower side of the soft product 6 (at the Z1 direction side) so that the soft product 6 to be placed does not overlap with another soft product 6. Accordingly, it is possible to place the soft product 6 so that the soft product 6 to be placed does not overlap with another soft product 6. This makes it possible to place the soft products 6 at an even height in the vertical direction of the soft product 6 (in the Z direction).

In the present embodiment, as set forth above, the first reception portion 111 (the second reception portion 112) is configured to rotate about the pivot shaft 115a (116a) extending along the longitudinal direction of the soft product 6 when placing the soft product 6. The hand unit 11 is configured to rotate the first reception portion 111 (the second reception portion 112) so that the first wall portion 111a (112a) can be moved toward the soft product 6 (toward the Z1 direction side) and so that the second wall portion 111c (112c) can be moved away from the first reception portion 111 (the second reception portion 112). By rotating the first reception portion 111 (the second reception portion 112) about the pivot shaft 115a (116a), it is possible to push the soft product 6 downward (in the Z1 direction) and to move another soft product 6 existing around the placing position away from the first reception portion 111 (the second reception portion 112).

In the present embodiment, as set forth above, the hand unit 11 includes the air cylinder 114 for rotating the first reception portion 111 and the second reception portion 112 when placing the soft product 6. It is therefore possible to rotate the first reception portion 111 and the second reception portion 112 and to place the soft product 6 by merely on/off controlling the air cylinder 114 driven by air. Therefore, unlike a case where the first reception portion 111 and the second reception portion 112 are rotated by a motor, it is possible to restrain the control for the placing of the soft product 6 from becoming complex.

In the present embodiment, as set forth above, the robot controller 3 is configured to perform the control operation of displacing the Y-direction position of the hand unit 11 for the reception of the soft product 6, based on the tilt of the soft product 6 with respect to the direction (the Y direction) orthogonal to the transfer direction of the conveyor 4 within the transfer plane. Accordingly, it is possible to restrain the product receiving position of the hand unit 11 from being deviated due to the tilt of the soft product 6 conveyed by the conveyor 4 with respect to the Y direction. It is therefore possible for the hand unit 11 to accurately process the soft product 6.

In the present embodiment, as set forth above, the robot system 100 includes the third sensor 43 and the fourth sensor 44 for sensing the tilt of the soft product 6 with respect to the Y direction. It is therefore possible to easily sense the tilt of the soft product 6 with respect to the Y direction. This makes it possible to readily restrain the product receiving position of the hand unit 11 from being deviated.

In the present embodiment, as set forth above, the third sensor 43 and the fourth sensor 44 are provided along the Y direction. The robot controller 3 is configured to calculate the tilt of the soft product 6 with respect to the Y direction, based on the difference between the timings at which the soft product 6 is sensed by the third sensor 43 and the fourth sensor 44. Therefore, unlike a case where the tilt of the soft product 6 with respect to the Y direction is sensed by image recognition or other methods, it is possible to restrain the process for the calculation of the tilt of the soft product 6 from becoming complex.

In the present embodiment, as set forth above, the hand unit 11 (21) is configured to place a plurality of soft products 6 within the product tray 5 in a mutually adjoining relationship. It is therefore possible to easily manufacture an article including a plurality of soft products 6 placed within the product tray 5 in a mutually adjoining relationship.

In the present embodiment, as set forth above, the hand unit 11 is mounted to the arm 12 of the robot 1 at the opposite side of the hand unit 21 (at the Y1 direction side). The hand unit 21 is mounted to the arm 22 of the robot 2 at the opposite side of the hand unit 11 (at the Y2 direction side). Accordingly, it is possible to arrange the robots 1 and 2 at the opposite sides in the Y direction of the conveyor 4 (in the transverse direction of a conveyor belt). This makes it possible to easily restrain the hand unit 11 and the hand unit 21 from interfering with each other.

The embodiment disclosed herein is illustrative in every respect and shall not be construed to be limitative. The scope of the disclosure is not limited to the description of the embodiment but is defined by the claims. All modifications equivalent in meaning and scope to the claims are included in the scope of the disclosure.

For example, while the soft product is folded by the hand unit (the robot hand) in the aforementioned embodiment, the robot hand may be configured to perform other processing than folding the soft product. The number of the sensors, the arms, and the hand units is not limited to the aforementioned embodiment but may be changed.

While two robots and two hand units (robot hands) are employed in the aforementioned embodiment, there may be provided one or more than two robot hands. In the case where there are provided more than two robot hands, the robot hands may be attached to the arms of the robots so as not to interfere with each other. While each of the robot hands includes two reception portions in the aforementioned embodiment, there may be provided one or more than two reception portions.

While the first wall portion and the second wall portion have been described to have predetermined fixed angles with respect to the horizontal plane, the angles may be changed if such a need arises. While each of the reception portions has been described to include the first wall portion, the bottom portion, and the second wall portion, the bottom portion may be omitted. The first wall portion and the second wall portion may be either planar surfaces or curved surfaces. Each of the reception portions may be a polygonal surface formed of more than two wall portions.

While the soft products are placed on the product tray (a container) in the aforementioned embodiment, it may be possible to place the soft products in a specified position other than the container as long as the soft products are processed and transferred. The number of the soft products placed on the product tray is not fixed to six but may be less or more than six.

While the sensors for sensing the soft product are arranged above the conveyor in the aforementioned embodiment, sensor units for sensing the reception of the soft product may be arranged in the robot hands. The soft product may be used for other purposes than the food production purpose.

In the aforementioned embodiment, for the sake of convenience in description, the process performed by the robot controller (the control unit) has been described using a flow-driven type flowchart for sequentially performing a process pursuant to a processing flow. Alternatively, the processing operation of the control unit may be performed by an event-driven type process for performing a process on an event-by-event basis. In this case, the process may be performed in a perfectly event-driven manner or by the combination of event drive and a flow drive.

## Claims

1. A robot hand configured to receive a workpiece conveyed by a conveyor at a lower side of the conveyor, process the workpiece, and place the processed workpiece in a specified position.

2. The robot hand of claim 1, wherein each of the first reception portion and the second reception portion extends along the longitudinal direction of the workpiece and has a substantially U-like cross section in a plane orthogonal to the longitudinal direction of the workpiece.

3. The robot hand of claim 1 or 2, wherein the workpiece is a soft object.

4. A robot system comprising one or more robot hands, each being recited in claim 1.

5. The robot system of claim 4, wherein each of the robot hands includes one or more reception portions, each of the reception portions including a passage portion through which the workpiece passes during reception and removal of the workpiece and a mounting portion on which the workpiece coming through the passage portion is placed.

6. The robot system of claim 4 or 5, further comprising:
a control unit configured to control receiving, processing, and placing operations of the workpiece which are performed by the robot hands, each of the robot hands including a first reception portion and a second reception portion arranged along a longitudinal direction of the workpiece to receive the workpiece.

7. The robot system of claim 6, wherein the control unit is configured to control the first reception portion and the second reception portion in such a way that the first reception portion and the second reception portion move so as to have workpiece receiving sides of the first reception portion and the second reception portion face each other, thereby folding the workpiece and holding the workpiece.

8. The robot system of claim 7, wherein each of the robot hands further includes an air drive unit for moving the first reception portion and the second reception portion such that the workpiece receiving sides of the first reception portion and the second reception portion face each other.

9. The robot system of claim 7 or 8, wherein each of the first reception portion and the second reception portion includes a first wall portion and a second wall portion extending along the longitudinal direction of the workpiece.

10. The robot system of claim 9, wherein the first wall portion is located farther away from the conveyor than the second wall portion during reception of the workpiece, the second wall portion being inclined outward at a smaller angle than the first wall portion.

11. The robot system of claim 9 or 10, wherein the control unit controls, when placing the workpiece, each of the robot hands so as to rotate the first reception portion and the second reception portion, such that the first wall portion is positioned above the workpiece, and so as to push the workpiece downward from the first reception portion and the second reception portion.

12. The robot system of any one of claims 9 to 11, wherein the control unit controls, when placing the workpiece, each of the robot hands in such a way that another workpiece existing around a placing position is moved away from the first reception portion and the second reception portion by the second wall portion positioned at the lower side of the workpiece so that the workpiece to be placed does not overlap with the another workpiece.

13. The robot system of any one of claims 4 to 12, wherein the control unit controls each of the robot hands so as to displace positions of the first reception portion and the second reception portion for reception of the workpiece in a direction orthogonal to a transfer direction of the conveyor within a transfer plane, based on a tilt of the workpiece with respect to the direction orthogonal to the transfer direction.

14. The robot system of claim 13, further comprising:
one or more sensors configured to sense the tilt of the workpiece with respect to the orthogonal direction.

15. The robot system of claim 14, wherein the number of the sensors is a multiple number, the multiple sensors being arranged along the orthogonal direction, and the control unit is configured to calculate the tilt of the workpiece with respect to the orthogonal direction, based on a difference between the timings at which the multiple sensors detect the workpiece.

16. The robot system of any one of claims 4 to 15, wherein the control unit controls each of the robot hands so as to place a plurality of workpieces within a container in a mutually adjoining relationship.

17. The robot system of any one of claims 4 to 16, wherein the robot hands include a first robot hand and a second robot hand arranged in an adjoining relationship with each other, the first robot hand and the second robot hand arranged along a transverse direction of the conveyor at a downstream side of the conveyor.

18. A method of producing a food product using one or more robot hands, each of the robot hands being configured to receive a workpiece conveyed by a conveyor at a lower side of the conveyor, process the workpiece, and place the processed workpiece in a specified position, comprising:
causing the robot hand to receive a workpiece conveyed by a conveyor at a lower side of the conveyor;
causing the robot hand to process the workpiece; and
causing the robot hand to place the workpiece in a specified position.

19. A product produced by the method of claim 18.
